# EUROPÄISCHE PATENTSCHRIFT

(11) **EP 0 475 210 B1**
(45) Veröffentlichungstag und Bekanntmachung des Hinweises auf die Patenterteilung: **23.10.1996**
(21) Anmeldenummer: 91114560.5
(22) Anmeldetag: 29.08.1991
(51) Int. Cl.: G06K 7/00, G06K 7/06, G06K 19/077, G06K 7/015

(54) **Kartenlesegerät für die elektrische Nachrichtentechnik**
Card read device for electric-communication engineering
Appareil de lecture de carte adapté aux techniques des communications électriques

(30) Priorität: 10.09.1990 DE 9012889 U
(43) Veröffentlichungstag der Anmeldung: 18.03.1992
(73) Patentinhaber: SIEMENS AKTIENGESELLSCHAFT, 80333 München (DE); AMPHENOL-TUCHEL ELECTRONICS GmbH, D-74064 Heilbronn (DE)
(72) Erfinder: Meschenmoser, Friedrich, W-8011 Neukeferloh (DE); Thomfohrde, Heiner, W-8044 Unterschleissheim (DE); Reichardt, Manfred, W-7102 Weinsberg (DE); Raab, Eberhard, W-7107 Bad Wimpfen (DE); Schuder, Bernd, W-7103 Schwaigern (DE)
(74) Vertreter: Fuchs, Franz-Josef, Dr.-Ing.

(56) Entgegenhaltungen:
- EP-A- 0 214 478
- EP-A- 0 424 263
- PATENT ABSTRACTS OF JAPAN vol. 10, no. 162 (P-466)(2218) 10. Juni 1986 & JP-A-61 015 289

## Beschreibung

Die Erfindung bezieht sich auf ein Kartenlesegerät für die elektrische Nachrichtentechnik, insbesondere für mobile Telefone, bei dem eine Identitätskarte in einen Schlitz des Lesers einschiebbar und am Ende der Schiebebewegung mit den Kontakten auf der Karte verbunden wird.

Neuerdings werden für derartige Identitätskarten auch sogenannte SIM-Karten (Subdriver Identify Module) verwendet, die in ihren Abmessungen (ca. 15x25 mm) erheblich geringer als die normalen in den Kartenleser einschiebbaren Chipkarten (ca. 55x85 mm) sind.

Aus dem Dokument EP-A-328 124 ist eine Adapterkarte für inichipkarten bekannt. Die Außenmessungen dieser Adapterkarte entsprechen denen einer konventionellen Chipkarte . Die Minichipkarte wird in die Karte eingesteckt und das Ganze dann in ein Kartenlesegerät eingeführt. Die Adapterkarte ist aber nicht in das Kartenlesegerät eingebaut. Die Minichipkarte kann also nicht direkt in das Gerät eingeführt werden.

Der Erfindung liegt die Aufgabe zugrunde, unter Verwendung des gleichen Kartenlesers eine kompatible vereinfachte Einrichtung für beide Chipkarten zu schaffen.

Diese Aufgabe wird bei einem Kartenlesegerät gemäß der im Anspruch 1 angegebenen Erfindung gelöst.

Weitere vorteilhafte Ausbildungen des Erfindungsgegenstandes finden sich in den Unteransprüchen.

Nachstehend wird die Erfindung anhand eines in den Figuren dargestellten Ausführungsbeispiels näher erläutert.

Die einzelnen Figuren stellen dabei folgendes dar.

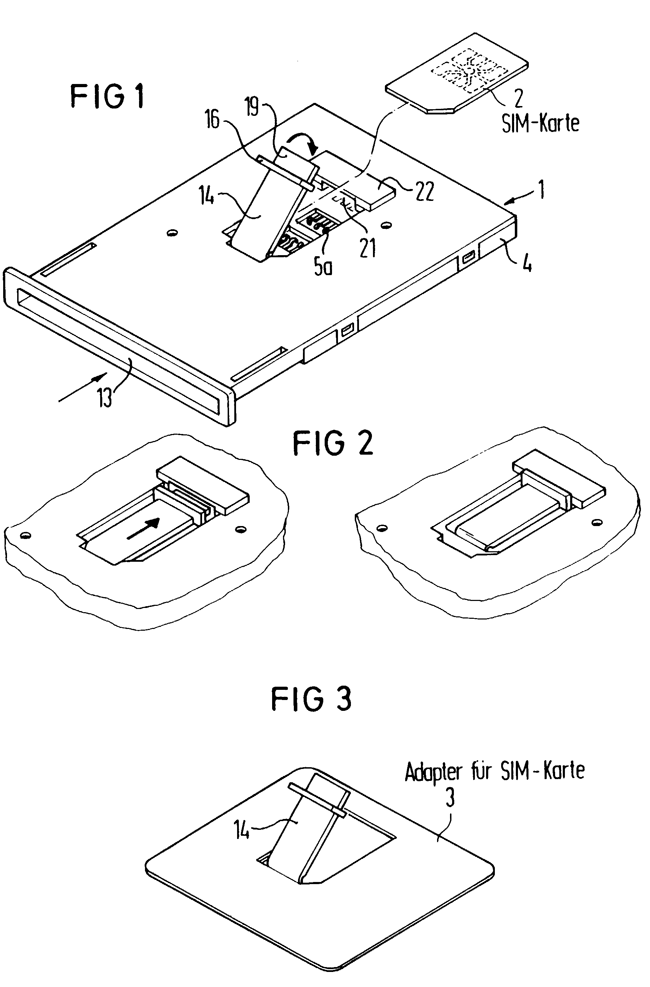

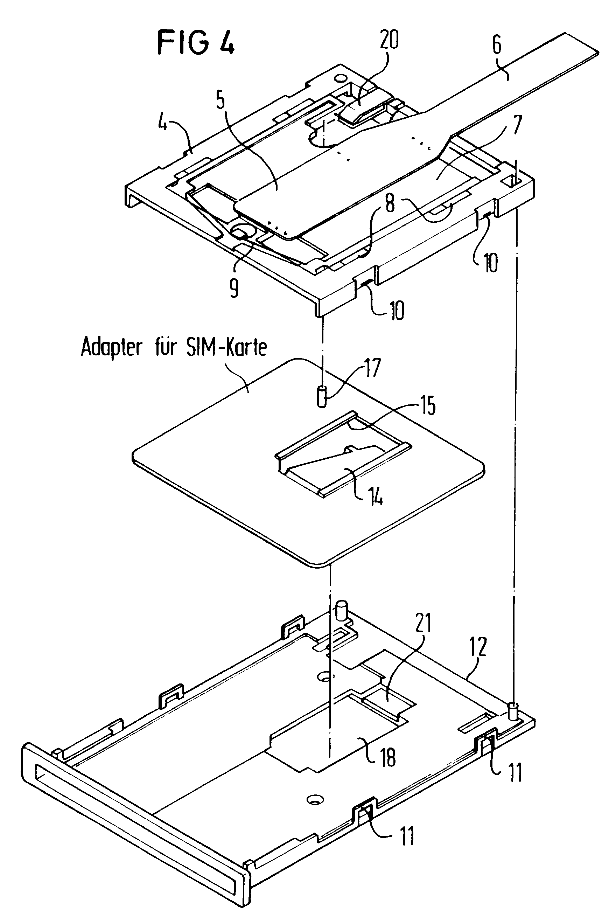

Die Figur 1 zeigt den gesamten Kartenleser mit Adapter vor dem Einlegen der darüber dargestellten SIM-Karte. Die Figur 2 zeigt die Verriegelung für die Halterung der SIM-Karte, links nach dem Einlegen und rechts im arretierten Zustand. Die Figur 3 zeigt die Adapterplatte selbst. Die Figur 4 in Explosionsdarstellung den Kartenleseraufbau mit Adapter.

Eine normale und bekannte Kartenleseeinrichtung 1 besteht aus einem Kartenfach 12 und einem darin befestigbaren Rahmen 4 in dem sich ein Gleitschieber 7 befindet, der die Kontaktflächen 5, die sich auf einem Leiterband 6 befinden, trägt. Die einzelnen Kontakte sind besser in Figur 1 zu erkennen und mit 5a bezeichnet. Der Sinn dieser Einrichtung ist der, daß nach Einschieben der normalen Chipkarte bis zu einem Anschlag zunächst noch keine Kontaktierung mit den Kontakten 5a erfolgt und dann nach einer anschließenden kurzen Schubbewegung durch seitliche Führungsbahnen 8 am mittels Feder 9 vorgespannten Gleitschieber ein allmähliches Andrücken an die Kontakte ohne wesentliche Schleifbewegung erfolgt. Das Rähmchen 4 ist in das Kartenfach - wie dargestellt - einlegbar und seitliche Ösen 11 greifen nach dem Einlegen federnd hinter entsprechende Ansätze 10 seitlich am Rähmchen 4. Dadurch wird das Rähmchen letztendlich mit dem Kartenfach 12 verrastet. Klemmzungen 20 am Rähmchen 4 sorgen im übrigen nach dem endgültigen Einschieben der Karte und der Kontaktierung dafür, daß die Karte im Andruckzustand gehalten wird.

Um nun für diese Einrichtung auch eine für Minichipkarten geeignete Anordnung zu schaffen, ist eine Adapterscheibe 3 vorgesehen, wie sie in Figur 3 im einzelnen dargestellt ist. Diese Adapterplatte hat am Ort der Kontaktflächen 5 einen Ausschnitt mit einer Randprägung 15, in den die SIM-Karte 2 einlegbar ist. Durch eine schräge Kante 2a an der Karte und die entsprechende Form des Ausschnitts im Adapter 3 läßt sich die Karte nur in einer bestimmten, richtigen Lage einlegen. An die Adapterplatte ist am besten gleich im Spritzverfahren eine federnde Zunge 14 angeformt, mittels der sich die SIM-Karte 2 durch Abklappen gegen diese im Adapter 3 arretieren läßt.

Dieser Adapter 3 ist nur in der richtigen Lage in das Rähmchen 4 einlegbar und zur Lagebestimmung dient hier zusätzlich und beispielsweise ein Pimpel 17, der in einem entsprechenden Durchbruch im Schieber 7 greift, so daß der Adapter ählich wie das Kontaktierungsende einer normalen Chipkarte im Rähmchen gehalten wird. Bei der endgültigen Kontaktierung durch die Endschiebebewegung greift dann das Rähmchen in die Klemmzungen 20 ein und wird gehalten.

Im Boden des Kartenfachs 12 ist nun an der Stelle der Minichipkarte eine Ausnehmungen 18 vorgesehen, durch das die Federzunge im geöffneten Zustand wie in Figur 1 dargestellt, hindurchgreift. Die Federzunge ist dabei so geformt und am Adapter befestigt, daß sie zunächst aufgeklappt ist, wodurch die Chipkarte 2 in den entsprechenden Ausschnitt einlegbar ist. In dieser Lage ist nun die Zunge 14 wie durch den Pfeil in Figur 1 angedeutet, niederdrückbar bis sie die SIM-Karte 2 abdeckt. Die Zunge hat in Schieberichtung einen Quersteg 16, der als Schiebegriff dient. Durch Schieben an diesen Quersteg gleitet das Ende der Zunge 19 in ein Fach 21 am Boden des Kartenfachs 12, das durch eine Abdeckung 22 gebildet wird. In diesem sogenannten Ladezustand ist dann die Minichipkarte sowohl arretiert als auch kontaktiert. Würde in diesem Zustand eine normale Chipkarte in den Einwurfschlitz 13 des Kartenfachs eingesteckt so ist der Zugang zum Kartenlesegerät hierfür gesperrt.

Durch die Verwendung eines solchen Adapters ist es insbesondere für den Servicetechniker durch ein paar Handgriffe leicht möglich, den üblichen Kartenleser für die Aufnahme von Minichipkarten umzurüsten. Umgekehrt wird nach Entfernen der Adapterplatte die Verwendung einer normalen großen Chipkarte wieder ermöglicht.

## Patentansprüche

1. Kartenlesegerät für die elektrische Nachrichtentechnik, insbesondere für mobile Telefone, bei dem ein Idenditifizierungsmittel in einen Schlitz des Lesers einführbar ist und am Ende der Schiebebewegung eine Kontaktfläche des Lesegeräts mit den Kontakten auf dem Identifizierungsmittel verbunden wird, wobei das Lesegerät sowohl zum Lesen von normalen Chipkarten als auch von kleineren Minichipkarten - sog. SIM Karten - geignet ist, und die Minichipkarten zum Lesen in eine flächige Adaptervorrichtung eingelegt werden, die eine Öffnung (15) zur Aufnahme einer Minichipkarte (2) hat, die in der Leseposition der Kontaktfläche gegenüberliegt, **dadurch gekennzeichnet**,
daß die Adaptervorrichtung eine in den Schlitz lösbar eingebaute Adapterplatte (3) ist und daß am Boden des Kartenfachs (12) an der Stelle der Öffnung (15) ein entsprechender Durchbruch vorgesehen ist, sowie eine klappenförmige Zunge (14), die bei eingelegter Minichipkarte die Minichipkarte (2) abdeckt und nach einer Schiebebewegung die Minichipkarte im Kontaktzustand arretiert.

2. Kartenlesegerät nach Anspruch 1,
**dadurch gekennzeichnet**,
daß an der Zunge (14) ein als Griff dienender Quersteg (16) vorgesehen ist, und am Boden des Kartenfaches eine Abdeckung für ein Fach -(21), in das das Ende (19) der Zunge durch Niederdrücken bis zum Anschlag am Griff einschiebbar ist.

3. Kartenlesegerät nach einem der vorhergehenden Ansprüche,
**dadurch gekennzeichnet**,
daß an der Adapterplatte (3) wenigstens ein Pimpel (17) vorgesehen ist, der zur Lagenstabilisierung in Schieberichtung dient.

## Claims

1. Card reading device for electric telecommunications, in particular for mobile telephones, in which an identification means can be inserted into the slot of the reader and, at the end of the sliding movement, a contact area of the reading device is connected to the contacts on the identification means, the reading device being suitable both for reading normal chip cards and for reading smaller minichip cards - so-called SIM cards -, and, for reading, the minichip card being placed in a flat adapter device which has an opening (15) for receiving a minichip card (2), which in the reading position lies opposite the contact area, characterized in that the adapter device is an adapter plate (3) detachably fitted into the slot and in that at the base of the card compartment (12) there is provided at the location of the opening (15) a corresponding clearance, and also a flap-shaped tongue (14), which covers the minichip card (2) when the said minichip card has been put into place and which arrests the minichip card in the contact state after a sliding movement.

2. Card reading device according to Claim 1, characterized in that on the tongue (14) there is provided a transverse bar (16), serving as a grip, and at the base of the card compartment there is provided a cover for a receptacle (21), into which the end (19) of the tongue can be pushed by pressing down until there is abutment with the grip.

3. Card reading device according to one of the preceding claims, characterized in that on the adapter plate (3) there is provided at least one nipple (17), which serves for positional stabilization in the sliding direction.

## Revendications

1. Appareil lecteur de cartes pour la technique électrique des communications, notamment pour des téléphones pour le service mobile, dans lequel un moyen d'identification peut être introduit dans une fente du lecteur et dans lequel une surface de contact de l'appareil lecteur est reliée, à la fin du coulissement, aux contacts du moyen d'identification, l'appareil lecteur étant approprié à la fois à la lecture de cartes à puce normales et de cartes minichip plus petites, dites cartes SIM, et les cartes minichip étant insérées pour la lecture dans un dispositif adaptateur plan, qui a une ouverture (15) pour la réception d'une carte (2) minichip, cette ouverture étant, dans la position de lecture, en face de la surface de contact, caractérisé en ce que le dispositif adaptateur est un plateau (3) adaptateur monté amovible dans la fente, il est prévu au fond du casier (12) de réception de cartes à l'endroit de l'ouverture (15) un trou correspondant, ainsi qu'une languette (14) en forme de volet, laquelle recouvre la carte minichip (2), lorsque celle-ci est insérée, et bloque la carte minichip dans l'état de contact après un coulissement.

2. Appareil lecteur de cartes suivant la revendication 1,
caractérisé en ce que
il est prévu sur la languette (14) une barrette transversale (16) servant de prise et, au fond du casier de réception de cartes, un couvercle pour un casier (21), dans lequel l'extrémité (19) de la languette peut coulisser par enfoncement jusqu'à butée de la prise.

3. Appareil lecteur de cartes suivant l'une des revendications précédentes,
caractérisé en ce que
il est prévu sur le plateau (3) d'adaptateur au moins un clou (17), qui sert à la stabilisation en position dans la direction de coulissement.
